Europäisches Patentamt

European Patent Office

Office européen des brevets

(19)

(11) Publication number: **0 026 085**
**B1**

(12) **EUROPEAN PATENT SPECIFICATION**

(45) Date of publication of patent specification: **13.04.83**

(51) Int. Cl.³: **H 04 B 7/005, H 04 B 7/185**

(21) Application number: **80303273.9**

(22) Date of filing: **17.09.80**

(54) Satellite communication system.

(30) Priority: **19.09.79 GB 7932468**

(43) Date of publication of application:
**01.04.81 Bulletin 81/13**

(45) Publication of the grant of the patent:
**13.04.83 Bulletin 83/15**

(84) Designated Contracting States:
**CH DE FR IT LI NL SE**

(56) References cited:
**US - A - 4 087 818**
**US - A - 4 146 893**

**CONFERENCE RECORD 1978 INTERNATIONAL CONFERENCE ON COMMUNICATIONS vol. 3, June 4—7, 1978 Toronto, CA, LIN-SHAN LEE: "New automatic polarization cancelling control for multiple-station satellite communication systems", pages 43.3.1—43.3.5**

(73) Proprietor: **THE MARCONI COMPANY LIMITED**
**Marconi House New Street**
**Chelmsford Essex CM1 1PL (GB)**

(72) Inventor: **Braine, Michael Rodney**
**Wychwood House Good Easter**
**Nr. Chelmsford Essex CM1 4RC (GB)**
Inventor: **Nouri, Mehdi**
**2, Julian Close**
**Chelmsford Essex CM1 5AZ (GB)**

(74) Representative: **Hoste, Colin Francis**
**The Marconi Company Limited Marconi House New Street**
**Chelmsford, Essex CM1 1PL (GB)**

Satellite communication system

This invention relates to satellite communication systems in which a large number of information channels are routed via a single satellite. The frequency bandwidth available for communication systems is strictly limited and as an increasingly large number of individual signal channels are required, the total bandwidth of the channels must be increased or the spacing between adjacent channels must become smaller. In order to increase the data handling capacity of a satellite, it has been proposed to use two independent signals having the same frequency in which each signal is plane polarised with its plane of polarisation being at right angles to the other signal. In this way a receiver which is arranged to receive the signals can be provided with an antenna which selectively accepts one plane of polarisation, but rejects the other. Using this technique the number of available channels can be doubled, but it has been found that de-polarisation of signals can occur and that the de-polarisation effect increases in magnitude at higher frequencies. The effect becomes particularly significant at frequencies of the order of gigahertz or greater. De-polarisation is believed to be caused within the earth's atmospheric layer by the presence of rain droplets and ice particles. The effect of de-polarisation on a satellite communications system is acknowledged in U.S. patent 4,087,818 and a way of reducing its effect is described therein. The effect of the de-polarisation is to produce interference at a receiver. For high quality broadcast signals, such as those signals which carry a broadcast television signal, it is important to minimise cross talk and interference between adjacent channels, since this could otherwise seriously degrade the quality of reception. The present invention seeks to provide an improved broadcast satellite communication system.

According to this invention a broadcast satellite communication system includes means for predicting the de-polarisation of a co-polar plane polarised high frequency signal occurring in an up-link radio path between an earth station and a broadcast satellite; means for transmitting over said path a co-polar signal and a cross-polar signal with the amplitude and phase of the cross-polar signal being arranged to provide a degree of cancellation of a de-polar signal resulting from the subsequent partial de-polarisation of the co-polar signal, so that a receiver at the satellite receives predominantly only the co-polar signal for subsequent broadcasting, and means for adjusting under clear sky conditions the level of the transmitted cross-polar signal.

Although partial de-polarisation will occur on both the uplink (earth-to-satellite path) and the downlink (satellite-to-earth path) compensation is provided for the uplink, since this requires only the presence of apparatus at the ground station for transmitting the cross-polar signal. Any de-polarisation of the cross-polar signal will result in a de-polar signal which has an amplitude which is so low at the receiver as to be insignificant.

The invention is particularly applicable to a broadcast system in which a signal at one frequency is sent via an uplink from a ground station to a geostationary satellite, which rebroadcasts the signal at a different frequency for reception by a large number of individual receivers on the earth. The signal may be re-broadcast by the satellite as a directional beam so that it can be received only in a pre-determined localised area. The system in accordance with the invention can be used to broadcast television programmes.

The co-planar plane polarised signal is that signal which carries the information or data which is sent over the communication system. In the case referred to above, the co-polar signal carries the television signal.

The amplitude and phase of the de-polarised signals which are formed from the co-polar signal change relatively slowly, typically at a rate which is less than 1 Hz. Consequently the necessary compensation can be predicted in advance by continuously monitoring the de-polarisation effect, so that forward correction can be provided by generating and transmitting an appropriate cross-polar signal which has an amplitude and phase which cancels out the undesired de-polar signal.

The invention is further described by way of example with reference to the accompanying drawings in which,

Figure 1 is an explanatory diagram,

Figures 2, 3 and 4 illustrate different ways of monitoring the de-polarisation to which a co-polar signal is subjected, and

Figure 5 shows part of a satellite communication system in accordance with the present invention.

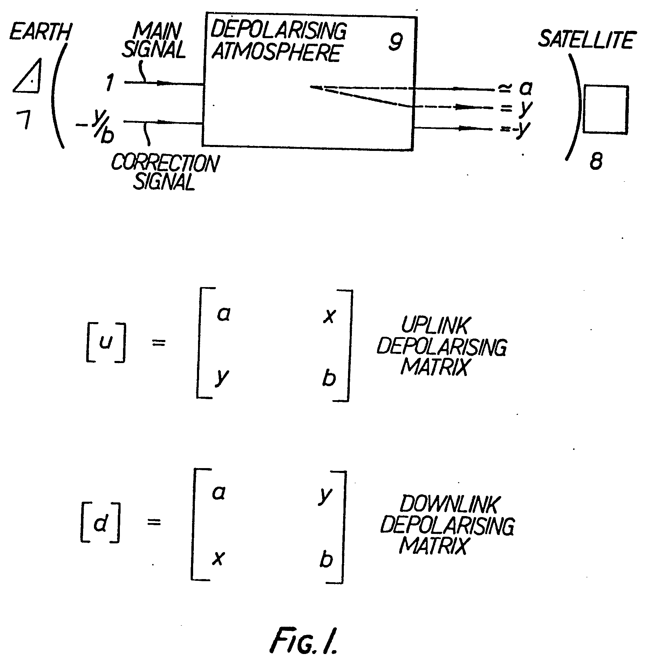

The correction concept and the general matrices for the de-polarising medium are indicated in Figure 1. The matrices represent the general de-polarising effect of the path between a satellite and an earth station, and include the effect of rain and ice particles on de-polarisation. The uplink matrix is [u] and the downlink matrix is [d]. The downlink matrix is the transpose of the uplink matrix only when the downlink and uplink frequencies are identical. When the frequencies are different (as will generally be the case in practice) the elements in [d] become a function of corresponding elements in [u] but the transposition remains unchanged.

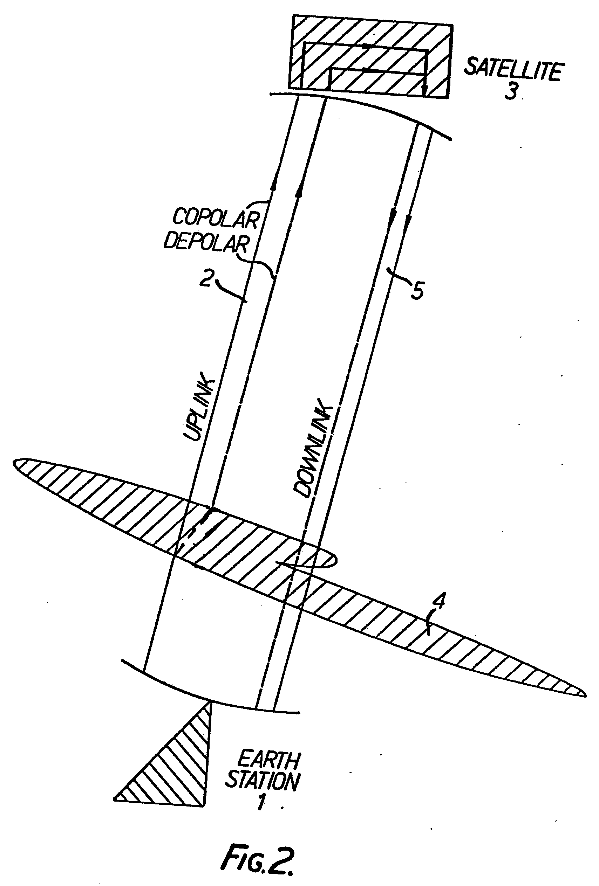

The upper diagram in Figure 1 represents the uplink path from an earth station 7 to a satellite 8 via a de-polarising atmosphere 9. The co-polar signal transmitted by the earth station 7 is the main information carrying signal and is indicated as having amplitude and phase characteristics represented by unity. The resulting co-polar signal received at the satellite is represented by $a$, and the de-polar signal which results from the depolarising effect of the atmosphere is represented at the satellite by $y$. The characteristics of $y$ are determined by methods described subsequently, and as a result the earth station also transmits a cross-polar signal having amplitude and phase characteristics designated by $-y/b$. The factor $b$ is so chosen that the effect of the atmosphere causes a de-polar signal $-y$ to result, and this signal then cancels the $+y$ signal derived from the co-polar signal. Cancellation can only be approximate for a number of reasons, but in particular it will be appreciated that the de-polar component $y$ is not constant, but may change with time. Thus when the compensating cross-polar correction signal is transmitted by the earth station 7, the de-polarisation effect of the atmosphere may have altered slightly from the instant at which the value of $y$ was obtained. However is is expected that residual de-polar signals at the satellite will be small. It is necessary to know in advance of the transmission of the co-polar signal from the earth station 7, the amplitude and phase of the cross-polar signal which must be transmitted simultaneously so as to provide compensation for the de-polarising effect. The ways in which the de-polarising effect can be monitored are indicated in Figures 2, 3 and 4.

Referring to Figure 2, an earth station 1 is arranged to transmit an uplink signal 2 to a geostationary satellite 3. The earth station 1 transmits a signal which is plane polarised in one plane of polarisation and is termed a co-polar signal. The uplink signal contains both a wideband signal which carries the information content of the communications system and also a closely adjacent beacon frequency. The beacon may be an unmodulated carrier wave. In passing through the earth's atmosphere 4, the co-polar signal is partially de-polarised and the satellite 3 receives not only a co-polar signal but also a de-polar signal having a relatively low amplitude and phase which in general is different from that of the co-polar signal. The relative amplitudes and phase of these two signals at the uplink beacon frequency are encoded by satellite 3 and returned to the ground station via a downlink channel 5, which typically has a frequency which is different from that of the uplink channel 2. The relative amplitude and phase of the de-polar signal are extracted at the ground station and subsequently a crosspolarised signal (not shown) is transmitted via the uplink channel 2 to the satellite 3 in addition to the information carrying co-polar signal. The cross-polar signal is one which has a plane of polarisation at right angles to the co-polar signal. The amplitude and phase of the cross-polar signal are so chosen as to cancel out the de-polar signal which will be derived by the earth's atmosphere from the co-polar signal, which is transmitted simultaneously with it. It has been found that the atmospheric de-polarisation effect is a relatively slow phenomenon and it typically changes at a frequency of less than 1 Hz. Since the transit effect of a signal travelling from the earth to the satellite and back to the earth station is about a quarter of a second, the atmospheric de-polarisation effect occurring at any particular instant in time is largely predictable.

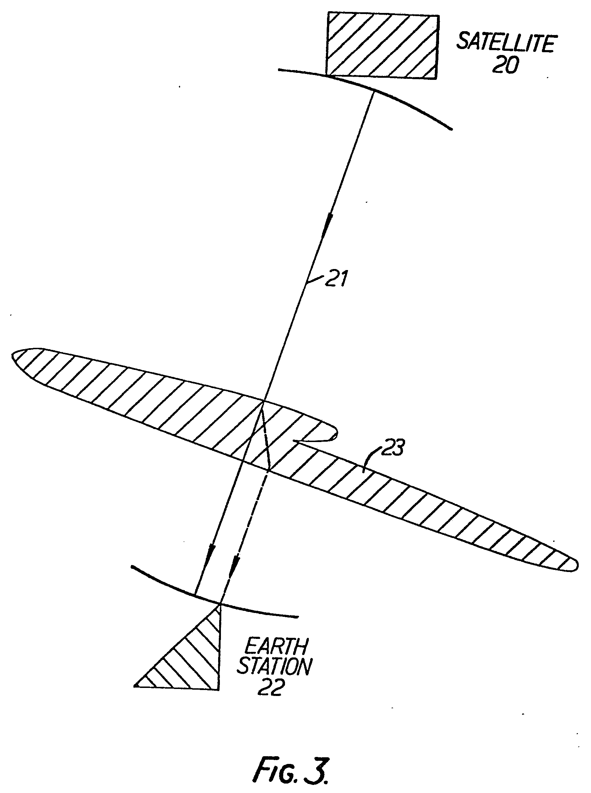

Figure 3 illustrates an alternative method of monitoring the atmospheric de-polarisation effect, which eliminates the delay caused by the transit time referred to previously. It is also possible to obtain a significant reduction in cost and complexity, but the method is most satisfactory if the frequencies of the uplink and the downlink are relatively close together, so that both experience similar atmospheric de-polarisation characteristics. It is believed that the de-polarisation characteristics obtained at one frequency can be used to provide forward correction at a different frequency by the application of suitable sealing factors. Typically the uplink could be 11 GHz and the downlink could be 12 GHz. A satellite 20 is arranged to transmit an unmodulated beacon signal at a fixed frequency of 12 GHz over a downlink channel 21 to an earth station 22. It is arranged to transmit only a co-polar signal, and the amplitude and phase of a cross-polar signal, which is generated from this signal within the earth's atmosphere 23, are received by the earth station 22. The required amplitude and phase information is extracted from the received signal and used to generate an appropriate cross-polar signal $-y/b$ as indicated in Figure 1. In this case the delay can be very short, typically 30 micro-seconds so that the atmospheric de-polarisation effect will have changed only very slowly from the instant in time at which it is measured to the later instant in time at which the compensating cross-polar signal is transmitted together with the normal co-polar signal.

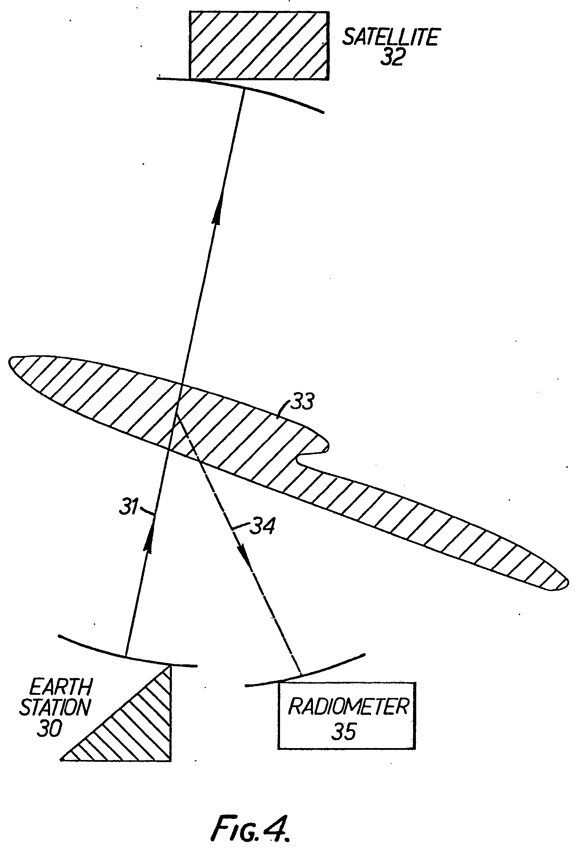

A third method of monitoring the effect of atmospheric de-polarisation is illustrated in Figure 4 in which an earth station 30 initially transmits only a co-polar beacon signal via an uplink channel 31 to a satellite 32. The co-polar signal is partially converted to a de-polar signal within the earth's atmosphere 33 and a proportion of the energy of this signal is back scattered towards the earth. The back scattered signal 34 can be detected by a sensitive radiometer 35 located on the earth. Assuming sufficient correlation between the back scattered signal and the de-polar signal received at the satellite an appropriate cross-polar signal can be generated at the ground station and transmitted with the broad band information carrying co-polar signal to provide the necessary degree of compensation. However, it will be necessary to extract both the required amplitude and phase characteristics from the back scattered signal to enable a satisfactory compensation to be provided and it is believed that in practice a sufficient correlation can be detected for this purpose. This last mentioned method does not suffer from frequency extrapolation problems, since the atmospheric de-polarisation effects are monitored using the up-link frequency. The uplink beacon frequency can be very close to the uplink information carrying frequency band. Additionally, the effect is measured immediately prior to the transmission of the cross-polar signal, so that transient times do not cause the correction signal to be out dated before it can be used.

Three variations are possible for the methods described with reference to Figures 2 and 3. The first variation is to transmit both polarisations alternately during successive switching intervals, so that the receiver receives the transmitted co-polar signal and the corresponding de-polar component at corresponding switching intervals. The signal may be transmitted by the earth station as in the first method proposed with reference to Figure 2 or alternatively it may be transmitted by the satellite as in the second method proposed with reference to Figure 3. In a practical system, it may not be desirable to switch the beacon signals in this way. In second and third variations only a single polarisation is transmitted over the signal path, whilst the de-polarisation effect is monitored. With regard to the second method which is illustrated in Figure 3, the second variation consists of the satellite transmitting a co-polar signal having a polarisation which is the same as the co-polar signal transmitted by the earth station and which carries the main signal information. The earth station, of course, transmits both the co-polar and de-polar signals. A third variation is that the satellite transmits only a cross-polar signal, but the earth station receives both the cross-polar and a de-polar signal simultaneously. This is likely to be the most satisfactory in practice, since the normal broadcast signal transmitted by the satellite will be a cross-polar signal. Similar variations are theoretically possible with the first method described with reference to Figure 2.

Even in the absence of rain or ice particles, the co-polar signal can be degraded, and to some extent this effect is not readily predictable. It may stem from propagation characteristics of the atmosphere, and it can be caused by imperfections in the transmitting and receiving antennas. In order to set the broadcast system with precision in a reliable manner, the de-polarisation effects are monitored under clear sky conditions so that compensation can be provided.

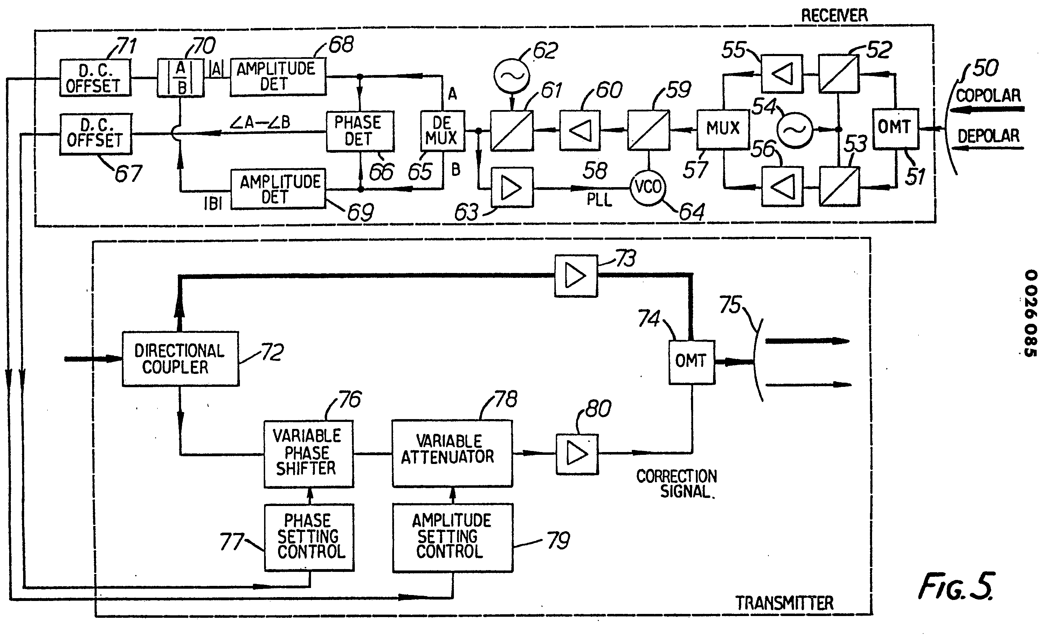

An example of a satellite communication system which utilises the third variation applied to the second method is described in connection with Figure 5. Only part of a ground station is shown in this Figure: the beacon receiver and part of the information signal transmitter are illustrated in diagrammatic form. In Figure 5, it is assumed that a satellite transmits a co-polar signal in the form of a fixed frequency beacon, which is different from the uplink signal frequency. The uplink signal carries the information which is to be subsequently re-broadcast by the satellite. The signal is re-broadcast by the satellite at the frequency which is different from the uplink frequency, and with a plane of polarisation which is at right angles to the co-polar signal transmitted by the earth station. The signal transmitted by the satellite includes a beacon signal which is received by the earth station and is thus also regarded as the downlink channel.

In Figure 5, the downlink signal is received at an antenna 50. In this Figure, the co-polar signal is regarded as being the beacon signal transmitted by the satellite and the de-polar signal as being the signal which is produced by the de-polarising effect of the atmosphere. Thus the co-polar signal indicated in Figure 5 is polarised at right angles to the plane of polarisation of the co-polar signal transmitted by the earth station. The signals received at the antenna 50 are passed via an orthogonal mode transducer 51, which separates out the co-polar and the de-polar signals from the common signal which is obtained at the antenna 50. The two signals are translated to a lower intermediate frequency by the action of two mixers 52 and 53, which are fed from a common local oscillator 54. The intermediate frequency signals are passed through matched gain amplifiers 55 and 56 to a multiplexing device 57. The multiplexing device 57 merely combines the two signals in such a way that they can be subsequently passed through a common amplifying stage. The use of a common amplifying stage ensures that both signals are amplified by exactly the same amount and differential phase shifts are not introduced. The multiplexing device 57 may act to produce either a time division multiplex signal or a frequency multiplex signal as appropriate. It is preferred to use time division multiplexing so that appropriate narrow band filters can be used subsequently. The common amplifying stage comprises a phase lock loop 58, which consists of a mixer 59, a high gain amplifier 60 and a mixer 61. The mixer 61 comprises a further frequency changing stage, which is fed from a local oscillator 62 and the output of the mixer 61 is fed via a loop amplifier 63 to control the frequency of a voltage controlled oscillator 64. In this way the frequency of the signal passed through the amplifier 60 is accurately controllable.

After the multiplexed signal has been amplified to the extent necessary, it is applied to a de-multiplexing circuit 65, which acts to separate out the two signals which correspond to the received co-polar and de-polar signals respectively. These two signals are compared by the phase detector 66, which acts to produce a signal representative of the phase difference between them—this signal is applied to a circuit 67, which generates a d.c. signal having a level representative of the phase difference. The two signals obtained at the de-multiplexing circuit 65 are also applied to amplitude detectors 68 and 69 respectively, the outputs of which are combined in a circuit 70 to produce a signal representative of the ratio of these two amplitudes. Again a circuit 71 produces a d.c. signal having a level representative of the amplitude ratio. The purpose of the circuits 67 and 71 is to enable a d.c. offset to be introduced so that the control signals applied to the transmitter represent only the correction needed to compensate for the atmospheric de-polarisation. Thus the circuits 67 and 71 can be set to provide zero outputs when receiving a signal under clear sky conditions, when no de-polarisation occurs due to rain or ice particles.

The circuit so far described acts to derive the amplitude and phase information which relates to the received co-polar and de-polar signals. From this the characteristics of the de-polarising atmosphere can be determined. The control signals obtained by the circuit 67 and 71 are thus applied to the transmitter at the earth station so as to enable a compensating cross-polar signal to be transmitted. The relevant portion of the transmitter comprises a directional coupler 72, which receives a carrier signal at the frequency of transmission. The directional coupler 72 transmits the signal via an amplifier 73 to an orthogonal mode transducer 74 and a transmitting antenna 75. A small fraction of the energy is passed by the directional coupler 72 to a variable phase shifter 76, the phase shift of which is determined by the control signal from the circuit 67 which is applied to a phase setting control circuit 77. Similarly a variable attenuator 78 controls the amplitude of the signal under the action of an amplitude setting control circuit 79, which in turn is controlled by the signal obtained from the circuit 71. The resulting signal is amplified by an amplifier 80 and then applied to the orthogonal mode transducer 74. The signal provided by the amplifier 80 thus has the same frequency as the main signal, but has modified amplitude and phase. The orthogonal mode transducer 74 combines the two signals applied so that they each have a plane of polarisation mutually at right angles to each other. The main signal obtained via amplifier 73 is transmitted as the co-polar signal, whereas the other signal obtained via the amplifier 80 is transmitted as a cross-polar signal. The cross-polar has much lower amplitude and its only purpose is, as previously described, to provide compensation for the de-polar signal which is produced within the atmosphere from the co-polar signal.

In Figure 5, the correction signals are applied to the r.f. stages of the transmitter. However, they can be applied to the lower frequency i.f. stages if preferred, and in practice this alternative may be more convenient.

## Claims

1. A broadcast satellite communication system including means (66, 68, 69) for predicting the de-polarisation of a co-polar plane polarised high frequency signal occurring in an uplink radio path (2) between an earth station (1) and a broadcast satellite (3); characterised by means (72—80) for transmitting over said path a co-polar signal and a cross-polar signal with the amplitude and phase of the cross-polar signal being arranged to provide a degree of cancellation of a de-polar signal resulting from the subsequent partial de-polarisation of the co-polar signal, so that a receiver at the satellite (3) receives predominantly only the co-polar signal for subsequent broadcasting, and means (67, 71) for adjusting under clear sky conditions the level of the transmitted cross-polar signal.

2. A system as claimed in claim 1 and wherein the de-polarisation of said co-polar plane polarised signal is predicted by continually monitoring the amplitude and phase of a de-polar signal produced from a plane polarised signal whilst it is traversing said path.

3. A system as claimed in claim 1 or 2 and wherein said means for transmitting the co-polar signal and the cross-polar signal is located at said earth station (1).

4. A system as claimed in claim 2 or 3 and wherein said plane polarised signal is transmitted from the earth station (1) to a satellite (3) and the phase and amplitude of a resulting de-polar signal received at the satellite (3) are monitored.

5. A system as claimed in claim 2 or 3 and wherein said plane polarised signal is transmitted from a satellite (3) to said earth station (1) and the phase and amplitude of a resulting de-polar signal received at the earth station (1) are monitored.

6. A system as claimed in claim 2 or 3 and wherein said plane polarised signal is transmitted from the earth station (1) and the phase and amplitude of resulting de-polar signals scattered back to the earth are monitored.

7. A system as claimed in claim 4 or 6 and wherein said plane polarised signal is said co-polar plane polarised high frequency signal.

## Revendications

1. Un système de télécommunications par satellites de diffusion comprenant des moyens (66, 68, 69) permettant de prévoir la dépolarisation d'un signal à haute fréquence polarisé dans le plan copolaire présent sur un trajet radio ascendant (2) entre une station terrienne (1) et un satellite de diffusion (3); caractérisé par des moyens (72—80) permettant de transmettre sur ledit trajet un signal copolaire et un signal contrapolaire, l'amplitude et la phase du signal contrapolaire étant calculées pour annuler en partie un signal dépolarisé résultant de la dépolarisation partielle subséquente du signal copolaire afin qu'un récepteur à bord du satellite (3) reçoive uniquement et de façon prédominante le signal copolaire pour diffusion ultérieure ainsi que des moyens (17, 71) pour ajuster, par temps clair, le niveau du signal contrapolaire émis.

2. Un système comme décrit à la revendication 1 et pour lequel la dépolarisation dudit signal polarisé dans le plan copolaire est prévu à l'aide de la surveillance en continu de l'amplitude de la phase du signal dépolarisé produit à partir d'un signal polarisé en plan alors qu'il traverse ledit trajet.

3. Un système comme décrit aux revendications 1 ou 2 et dans lequel lesdits moyens utilisés pour émettre le signal copolaire et le signal contrapolaire se trouvent dans ladite station terrienne (1).

4. Un système comme décrit aux revendications 2 ou 3 et dans lequel ledit signal polarisé en plan est émis à partir de la station terrienne (1) vers un satellite (3) et dans lequel on surveille la phase et l'amplitude d'un signal dépolarisé résultant reçu par le satellite (3).

5. Un système comme décrit aux revendications 2 ou 3 et dans lequel ledit signal polarisé en plan est émis par un satellite (3) vers ladite station terrienne (1) et dans lequel on surveille la phase et l'amplitude d'un signal dépolarisé résultant reçu par la station terrienne (1).

6. Un système comme décrit aux revendications 2 ou 3 et dans lequel ledit signal polarisé en plan est émis à partir de la station terrienne (1) et dans lequel on surveille la phase et l'amplitude des signaux dépolarisés résultants et renvoyés par diffusion troposphérique.

7. Un système comme décrit aux revendications 4 ou 6 et dans lequel ledit signal polarisé en plan est considéré comme un signal à haute fréquence polarisé dans le plan copolaire.

**Patentansprüche**

1. Satelliten-Rundfunkfernmeldesystem mit Einrichtungen (66, 68, 69) zur Voraussage der Depolarisierung eines gleichpolaren, linear polarisierten Hochfrequenzsignals, welches in einem funkstreckenaufwärts liegendem Pfad (2) zwischen einer Erdstation (1) und einem Rundfunksatelliten (3) auftritt, gekennzeichnet durch Einrichtungen (72—80) zum Übertragen eines gleichpolaren Signals und eines kreuzpolaren Signals über den besagten Pfad, wobei die Amplitude und Phase des kreuzpolaren Signals zu einer bestimmten Löschung des sich aus nachfolgender, teilweiser Depolarisierung des gleichpolaren Signals ergebenden depolaren Signals ausgebildet sind, so dass ein am Satelliten (3) befindlicher Empfänger überweigend nur das gleichpolare Signal zum nachfolgendem Aussenden empfängt, sowie Einrichtungen (17, 71) zur Pegeleinstellung des übertragenen kreuzpolaren Signals bei klarem Himmel.

2. System nach Anspruch 1, dadurch gekennzeichnet, dass Voraussage der Polarisierung das besagte gleichpolarig, linear polarisierte Signal durch kontinuierliche Überwachung der Amplitude und Phase eines depolaren Signals während des Durchgangs desselben über den besagten Pfad erreicht wird.

3. System nach Anspruch 1 oder 2, dadurch gekennzeichnet, dass Einrichtungen zum Übertragen des gleichpolaren Signals vorgesehen sind, wobei sich das kreuzpolare Signal bei der besagten Erdstation (1) befindet.

4. System nach Anspruch 2 oder 3, dadurch gekennzeichnet, dass das besagte linear polarisierte Signal von der Erdstation (1) zu einem Satelliten (3) übertragen wird, wobei die Phase und die Amplitude eines sich ergebenden, am Satelliten (3) empfangenen depolaren Signals überwacht werden.

5. System nach Anspruch 2 oder 3, dadurch gekennzeichnet, dass das besagte linear polarisierte Signal von einem Satelliten (3) zur besagten Erdstation (1) übertragen wird, wobei die Phase und die Amplitude eines sich ergebenden an der Erdstation (1) empfangenen depolaren Signals überwacht werden.

6. System nach Anspruch 2 oder 3, dadurch gekennzeichnet, dass das linear polarisierte Signal von der Erdstation (1) übertragen wird und die Phase und die Amplitude der sich ergebenden, zur Erde zurückgestreuten, depolaren Signale überwacht werden.

7. System nach Ansprüchen 4 oder 6, dadurch gekennzeichnet, dass das besagte linear polarisierte Signal ein gleichpolares, linear polarisiertes Hochfrequenz-Signal ist.

EARTH

MAIN SIGNAL

DEPOLARISING ATMOSPHERE    9

SATELLITE

7

1

$-\frac{y}{b}$

CORRECTION SIGNAL

$\simeq a$

$= y$

$= -y$

8

$$[u] \;=\; \begin{bmatrix} a & x \\ y & b \end{bmatrix} \quad \begin{array}{l}\textit{UPLINK}\\ \textit{DEPOLARISING}\\ \textit{MATRIX}\end{array}$$

$$[d] \;=\; \begin{bmatrix} a & y \\ x & b \end{bmatrix} \quad \begin{array}{l}\textit{DOWNLINK}\\ \textit{DEPOLARISING}\\ \textit{MATRIX}\end{array}$$

*FIG. I.*

COPOLAR
DEPOLAR

2

5

SATELLITE
3

UPLINK

DOWNLINK

4

EARTH
STATION
1

*FIG.2.*

*FIG. 3.*

FIG. 4.

Fig. 5.